# EUROPÄISCHE PATENTSCHRIFT

(11) **EP 2 485 774 B1**
(45) Veröffentlichungstag und Bekanntmachung des Hinweises auf die Patenterteilung: **09.09.2015**
(21) Anmeldenummer: 10763174.9
(22) Anmeldetag: 01.10.2010
(51) Int. Cl.: C08L 71/02, A61L 15/22, C08F 2/10, C08F 2/16, B01J 19/22, C08L 33/00, C08F 2/01, B26D 1/00, B29B 17/00, A61L 15/60, C08L 33/06, C08F 2/18, C08F 220/06, C08F 4/40, C08G 65/332

(54) **VERFAHREN ZUR KONTINUIERLICHEN HERSTELLUNG WASSERABSORBIERENDER POLYMERPARTIKEL**
METHOD FOR CONTINUOUS PRODUCTION OF WATER-ABSORBENT POLYMER PARTICLES
PROCÉDÉ DE PRODUCTION EN CONTINU DE PARTICULES POLYMÈRES QUI ABSORBENT L'EAU

(30) Priorität: 09.10.2009 EP 09172697
(43) Veröffentlichungstag der Anmeldung: 15.08.2012
(73) Patentinhaber: BASF SE, 67056 Ludwigshafen (DE)
(72) Erfinder: FUNK, Rüdiger, 65527 Niedernhausen (DE); SCHRÖDER, Jürgen, 67071 Ludwigshafen (DE)
(86) Internationale Anmeldenummer: PCT/EP2010/064634
(87) Internationale Veröffentlichungsnummer: WO 2011/042362

(56) Entgegenhaltungen:
- EP-A1- 0 228 638
- US-A- 5 455 284
- F. L. Buchholz, A. T. Graham: "Modern Superabsorbent Polymer Technology", 31. Dezember 1998 (1998-12-31), Wiley-VCH, New York, XP002615545, ISBN: 978-0-471-19411-8 in der Anmeldung erwähnt Seite 93 - Seite 96 Seite 77 - Seite 84

## Beschreibung

Die vorliegende Erfindung betrifft ein Verfahren zur kontinuierlichen Herstellung wasserabsorbierender Polymerpartikel, umfassend Polymerisation einer Monomerlösung oder -suspension auf einem kontinuierlich umlaufenden Band, Trocknung, Mahlung, Klassierung und zumindest teilweiser Rückführung des bei der Klassierung anfallenden Unterkorns, wobei das rückgeführte Unterkorn mit der Monomerlösung oder - suspension vermischt wird.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Gemäß der Monographie "Modern Superabsorbent Polymer Technology", F.L. Buchholz und A.T. Graham, Wiley-VCH, 1998, Seiten 77 bis 84, werden wasserabsorbierende Polymere üblicherweise in kontinuierlichen Knetreaktoren oder auf kontinuierlich umlaufenden Bändern hergestellt.

Gemäß EP 1 097 946 A2 führen Überhitzungen bei der Polymerisation auf kontinuierlich umlaufenden Bändern zu Einbußen bei der Produktqualität. Daher muss der vordere Bereich des Bandes gekühlt werden. In den Beispielen werden hochkonzentrierte Monomerlösungen in dünnen Schichten polymerisiert.

Gemäß der Monographie "Modern Superabsorbent Polymer Technology", F.L. Buchholz und A.T. Graham, Wiley-VCH, 1998, Seiten 95 und 96, werden wasserabsorbierende Polymerpartikel mit zu geringer Korngröße üblicherweise in das Verfahren zurückgeführt.

EP 0 513 780 A1 beschreibt die Rückführung wasserabsorbierender Polymerpartikel durch Einmischen in die Monomerlösung. In den Beispielen werden niedrig konzentrierte Monomerlösungen in gerührten Reaktoren polymerisiert.

EP 0 454 497 B1 offenbart die Rückführung des Unterkorns in die Monomerlösung. Wichtig hierbei ist die Wahl der optimalen Verfahrensbedingungen. In den Beispielen wird in Knetreaktoren polymerisiert.

US 5,455,284 lehrt das Vordispergieren des Unterkorns in einer Teilmenge des Monomers.

Aufgabe der vorliegenden Erfindung war die Bereitstellung eines verbesserten Verfahrens zur Herstellung qualitativ hochwertiger wasserabsorbierender Polymerpartikel.

Gelöst wurde die Aufgabe durch ein Verfahren zur kontinuierlichen Herstellung wasserabsorbierender Polymerpartikel durch Polymerisation einer Monomerlösung oder - suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,

umfassend Polymerisation auf einem kontinuierlich umlaufenden Band, Trocknung, Mahlung, Klassierung und zumindest teilweiser Rückführung des bei der Klassierung anfallenden Unterkorns in die Monomerlösung oder -suspension, dadurch gekennzeichnet, dass die Anzahl an ethylenischen Doppelbindungen in der Monomerlösung oder -suspension mindestens 4 mol/kg und die Schichtdicke der Monomerlösung oder - suspension auf dem umlaufenden Band mindestens 5 cm beträgt.

Als Unterkorn im Sinne dieser Erfindung wird eine bei der Klassierung anfallende Korngrößenfraktion bezeichnet, die eine geringere mittlere Korngröße als die Korngrößenfraktion des Zielprodukts aufweist. Zur Abtrennung des Unterkorns wird ein Sieb mit einer Maschenweite von bis zu 250 µm eingesetzt. Die Maschenweite des Siebes beträgt vorzugsweise mindestens 100 µm, besonders bevorzugt mindestens 150 µm, ganz besonders bevorzugt mindestens 200 µm.

Die Anzahl an ethylenischen Doppelbindungen in der Monomerlösung oder - suspension beträgt vorzugsweise 4,5 bis 9 mol/kg, besonders bevorzugt 5 bis 8 mol/kg, ganz besonders bevorzugt 5,5 bis 7 mol/kg.

Die Schichtdicke der Monomerlösung oder -suspension auf dem umlaufenden Band beträgt vorzugsweise 7 bis 20 cm, besonders bevorzugt 9 bis 15 cm, ganz besonders bevorzugt 10 bis 12 cm.

Der Wassergehalt der Monomerlösung oder -suspension beträgt vorzugsweise weniger als 60 Gew.-%, besonders bevorzugt weniger als 55 Gew.-%, ganz besonders bevorzugt weniger als 50 Gew.-%.

Die Menge an rückgeführtem Unterkorn beträgt von 1 bis 30 Gew.-%, bevorzugt von 3 bis 20 Gew.-%, besonders bevorzugt von 5 bis 10 Gew.-%, jeweils bezogen auf die Monomerlösung.

Der Wassergehalt des rückgeführten Unterkorns beträgt vorzugsweise weniger als 8 Gew.-%, besonders bevorzugt weniger als 6 Gew.-%, ganz besonders bevorzugt weniger als 5 Gew.-%.

Die Verweilzeit auf dem Band sollte vorzugsweise mindestens 15 Minuten, besonders bevorzugt mindestens 30 Minuten, ganz besonders bevorzugt mindestens 45 Minuten, betragen.

Mit steigendem Anteil an ethylenischen Doppelbindungen in der Monomerlösung oder -suspension steigt die Polymerisationswärme und kann nicht mehr ausreichend schnell abgeführt werden. Die Folge sind Produktschädigungen durch Überhitzung des erzeugten Polymergels. Der vorliegenden Erfindung liegt die Erkenntnis zu Grunde, dass durch Zusatz von Unterkorn die Polymerisationsgeschwindigkeit gesenkt werden kann. Die Polymerisationswärme wird über einen längeren Zeitraum freigesetzt und kann besser abgeführt werden. Dies ermöglicht die Verwendung hoher Monomerkonzentrationen in Verbindung mit hohen Schichtdicken bei der statischen Polymerisation.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallgloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² (AUL0.3psi) durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Rediox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. übersättigte Monomerlösungen einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren werden beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden kann, beispielsweise in einem Fleischwolf, Extruder oder Kneter.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 50 bis 80 mol-%, ganz besonders bevorzugt von 60 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA (European Disposables and Nonwovens Association) empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße (Unterkorn) an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA (European Disposables and Nonwovens Association) empfohlenen Testmethode Nr. WSP 220.2-05 "Partikel size distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindestens 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel (Unterkorn) niedrig sein.

Zu kleine Polymerpartikel werden daher üblicherweise abgetrennt und in das Verfahren rückgeführt. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Der Anteil an Partikeln mit einer Partikelgröße von höchstens 850 µm, beträgt vorzugsweise mindestens 90 Gew.-%, besonders bevorzugt mindestens 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/31482 A1 Morpholin-2,3-dion und dessen Derivate als geeignete Oberflächennachvernetzer beschrieben.

Bevorzuge Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit dem Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die O-berflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Wassergehalt gemäß der von der EDANA (European Disposables and Nonwovens Association) empfohlenen Testmethode Nr. WSP 230.2-05 "Moisture content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA (European Disposables and Nonwovens Association) empfohlenen Testmethode Nr. WSP 241.2-05 "Centrifuge retention capacity" bestimmt.

Die gemäß dem erfindungsgemäßen Verfahren hergestellten wasserabsorbierenden Polymerpartikel weisen eine Absorption unter einem Druck von 49,2 g/cm² (AUL0.7psi) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² (AUL0.7psi) der wasserabsorbierenden Polymerpartikel beträgt üblicherweise weniger als 35 g/g. Die Absorption unter einem Druck von 49,2 g/cm² (AUL0.7psi) wird analog der von der EDANA (European Disposables and Nonwovens Association) empfohlenen Testmethode Nr. WSP 242.2-05 "Absorption under pressure" bestimmt, wobei statt eines Drucks von 21,0 g/cm² ein Druck von 49,2 g/cm² eingestellt wird.

Gemäß dem erfindungsgemäßen Verfahren können wasserabsorbierende Polymerpartikel hoher Qualität hergestellt werden. Die als Zwischenprodukt erhaltenen Polymergele lassen sich aufgrund ihres niedrigen Wassergehaltes mit geringem Energieeinsatz trocknen.

### Beispiele

### Beispiel 1 (nicht erfindungsgemäß)

In einen 1.000 ml Kunststoffbecher (105 mm Innendurchmesser und 145 mm Höhe) wurden 19,54 g Acrylsäure und 205,01 g einer 37,3gew.-%igen wässrigen Natriumacrylatlösung eingewogen. Unter Rühren mittels eines Magnetkreuzrührers wurden 0,54 g Polyethylenglykol 400-diacrylat (Diacrylat eines Polyethylenglykols mit einem Molgewicht von ca. 400 g/mol) und 15,46 g Wasser zugesetzt. Die Anzahl an ethylenischen Doppelbindungen in der Monomerlösung betrug 4,4 mol/kg. Anschließend wurde der Kunststoffbecher mit einer Kunststofffolie verschlossen, ein PTFE-beschichteter Temperaturfühler mittig in der Lösung positioniert und die Lösung über eine Glasfritte mit Stickstoff durchströmt.

Nach 30 Minuten wurden 2,15 g einer 10gew.-%igen wässrigen Lösung von 2,2'-Azobis(2-methylpropionamidine)dihydrochlorid mittels einer Einwegspritze eingespritzt. Nach weiteren 10 Minuten wurden 1,30 g einer 10gew.-%igen wässrigen Lösung von Natriumperoxodisulfat und 0,50 g einer 1gew.-%igen wässrigen Lösung von Ascorbinsäure mittels Einwegspritzen eingespritzt und die Temperaturaufzeichnung gestartet. Die Maximaltemperatur während der Polymerisation betrug 102°C. Die Schichtdicke der Monomerlösung betrug 3 cm.

Das erhaltene Polymergel wurde getrocknet und auf eine Partikelgröße von weniger als 150 µm zerkleinert (Unterkorn).

### Beispiel 2 (nicht erfindungsgemäß)

In einen 1.000 ml Kunststoffbecher (105 mm Innendurchmesser und 145 mm Höhe) wurden 19,54 g Acrylsäure und 205,01 g einer 37,3gew.-%igen wässrigen Natriumacrylatlösung eingewogen. Unter Rühren mittels eines Magnetkreuzrührers wurden 0,54 g Polyethylenglykol 400-diacrylat (Diacrylat eines Polyethylenglykols mit einem Molgewicht von ca. 400 g/mol) und 15,46 g zerkleinerte Polymerpartikel (Unterkorn) aus Beispiel 1 zugesetzt. Die Anzahl an ethylenischen Doppelbindungen in der Monomerlösung betrug 4,4 mol/kg. Anschließend wurde der Kunststoffbecher mit einer Kunststofffolie verschlossen, ein PTFE-beschichteter Temperaturfühler mittig in der Lösung positioniert und die Lösung über eine Glasfritte mit Stickstoff durchströmt.

Nach 30 Minuten wurden 2,15 g einer 10gew.-%igen wässrigen Lösung von 2,2'-Azobis(2-methylpropionamidine)dihydrochlorid mittels einer Einwegspritze eingespritzt. Nach weiteren 10 Minuten wurden 1,30 g einer 10gew.-%igen wässrigen Lösung von Natriumperoxodisulfat und 0,50 g einer 1gew.-%igen wässrigen Lösung von Ascorbinsäure mittels Einwegspritzen eingespritzt und die Temperaturaufzeichnung gestartet. Die Maximaltemperatur während der Polymerisation betrug 87°C. Die Schichtdicke der Monomerlösung betrug 3 cm.

### Beispiel 3 (nicht erfindungsgemäß)

In einen 1.000 ml Kunststoffbecher (105 mm Innendurchmesser und 145 mm Höhe) wurden 39,08 g Acrylsäure und 410,02 g einer 37,3gew.-%igen wässrigen Natriumacrylatlösung eingewogen. Unter Rühren mittels eines Magnetkreuzrührers wurden 1,08 g Polyethylenglykol 400-diacrylat (Diacrylat eines Polyethylenglykols mit einem Molgewicht von ca. 400 g/mol) und 30,92 g Wasser zugesetzt. Die Anzahl an ethylenischen Doppelbindungen in der Monomerlösung betrug 4,4 mol/kg. Anschließend wurde der Kunststoffbecher mit einer Kunststofffolie verschlossen, ein PTFE-beschichteter Temperaturfühler mittig in der Lösung positioniert und die Lösung über eine Glasfritte mit Stickstoff durchströmt.

Nach 30 Minuten wurden 4,30 g einer 10gew.-%igen wässrigen Lösung von 2,2'-Azobis(2-methylpropionamidine)dihydrochlorid mittels einer Einwegspritze eingespritzt. Nach weiteren 10 Minuten wurden 2,60 g einer 10gew.-%igen wässrigen Lösung von Natriumperoxodisulfat und 1,00 g einer 1gew.-%igen wässrigen Lösung von Ascorbinsäure mittels Einwegspritzen eingespritzt und die Temperaturaufzeichnung gestartet. Die Maximaltemperatur während der Polymerisation betrug 106°C. Die Schichtdicke der Monomerlösung betrug 6 cm.

### Beispiel 4

In einen 1.000 ml Kunststoffbecher (105 mm Innendurchmesser und 145 mm Höhe) wurden 39,08 g Acrylsäure und 410,02 g einer 37,3gew.-%igen wässrigen Natriumacrylatlösung eingewogen. Unter Rühren mittels eines Magnetkreuzrührers wurden 1,08 g Polyethylenglykol 400-diacrylat (Diacrylat eines Polyethylenglykols mit einem Molgewicht von ca. 400 g/mol) und 30,92 g zerkleinerte Polymerpartikel (Unterkorn) aus Beispiel 1 zugesetzt. Die Anzahl an ethylenischen Doppelbindungen in der Monomerlösung betrug 4,4 mol/kg. Anschließend wurde der Kunststoffbecher mit einer Kunststofffolie verschlossen, ein PTFE-beschichteter Temperaturfühler mittig in der Lösung positioniert und die Lösung über eine Glasfritte mit Stickstoff durchströmt.

Nach 30 Minuten wurden 4,30 g einer 10gew.-%igen wässrigen Lösung von 2,2'-Azobis(2-methylpropionamidine)dihydrochlorid mittels einer Einwegspritze eingespritzt. Nach weiteren 10 Minuten wurden 2,60 g einer 10gew.-%igen wässrigen Lösung von Natriumperoxodisulfat und 1,00 g einer 1gew.-%igen wässrigen Lösung von Ascorbinsäure mittels Einwegspritzen eingespritzt und die Temperaturaufzeichnung gestartet. Die Maximaltemperatur während der Polymerisation betrug 79°C. Die Schichtdicke der Monomerlösung betrug 6 cm.

Die Beispiele belegen, dass Überhitzungen im Polymergel durch Zusatz von Unterkorn zur Monomerlösung vermieden werden können, insbesondere bei höheren Schichtdicken der Monomerlösung.

## Patentansprüche

1. Verfahren zur kontinuierlichen Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend Polymerisation auf einem kontinuierlich umlaufenden Band, Trocknung, Mahlung, Klassierung und zumindest teilweiser Rückführung des bei der Klassierung anfallenden Unterkorns in die Monomerlösung oder -suspension, wobei zur Abtrennung des Unterkorns ein Sieb mit einer Maschenweite von bis zu 250 µm eingesetzt wird, **dadurch gekennzeichnet, dass** die Menge an rückgeführtem Unterkorn, bezogen auf die Monomerlösung, von 1 bis 30 Gew.-%, die Anzahl an ethylenischen Doppelbindungen in der Monomerlösung oder - suspension mindestens 4 mol/kg und die Schichtdicke der Monomerlösung oder - suspension auf dem umlaufenden Band mindestens 5 cm beträgt.

2. Verfahren gemäß Anspruch 1, **dadurch gekennzeichnet, dass** der Wassergehalt der Monomerlösung oder -suspension weniger als 60 Gew.-% beträgt.

3. Verfahren gemäß Anspruch 1 oder 2, **dadurch gekennzeichnet, dass** die Menge an rückgeführtem Unterkorn, bezogen auf die Monomerlösung, von 5 bis 10 Gew.-% beträgt.

4. Verfahren gemäß einem der Ansprüche 1 bis 3, **dadurch gekennzeichnet, dass** das rückgeführte Unterkorn einen Wassergehalt von weniger als 10 Gew.-% aufweist.

5. Verfahren gemäß einem der Ansprüche 1 bis 4, **dadurch gekennzeichnet, dass** die Verweilzeit auf dem umlaufenden Band mindestens 15 Minuten beträgt.

6. Verfahren gemäß einem der Ansprüche 1 bis 5, **dadurch gekennzeichnet, dass** das Monomer a) zu mindestens 50 mol-% Acrylsäure ist.

7. Verfahren gemäß Anspruch 6, **dadurch gekennzeichnet, dass** die Acrylsäure zu mindestens 25 mol-% neutralisiert ist.

8. Verfahren gemäß einem der Ansprüche 1 bis 7, **dadurch gekennzeichnet, dass** die Monomerlösung mindestens 0,01 Gew.-% Vernetzer b), bezogen auf Monomer a) enthält.

9. Verfahren gemäß einem der Ansprüche 1 bis 8, **dadurch gekennzeichnet, dass** die wasserabsorbierenden Polymerpartikel eine Zentrifugenretentionskapazität von mindestens 15 g/g aufweisen.

## Claims

1. A process for continuously producing water-absorbing polymer particles by polymerizing a monomer solution or suspension comprising
a) at least one ethylenically unsaturated monomer which bears acid groups and may be at least partly neutralized,
b) at least one crosslinker,
c) at least one initiator,
d) optionally one or more ethylenically unsaturated monomers copolymerizable with the monomers mentioned under a) and
e) optionally one or more water-soluble polymers,
comprising polymerization on a continuous belt, drying, grinding, classifying and at least partly recycling the undersize obtained in the classification into the monomer solution or suspension, wherein with removal of the undersize using a sieve with a mesh size of up to 250µm, wherein the amount of recycled undersize, based on the monomer solution, is from 1 to 30% by weight, the number of ethylenic double bonds in the monomer solution or suspension is at least 4 mol/kg and the layer thickness of the monomer solution or suspension on the continuous belt is at least 5 cm.

2. The process according to claim 1, wherein the water content of the monomer solution or suspension is less than 60% by weight.

3. The process according to claim 1 or 2, wherein the amount of recycled undersize, based on the monomer solution, is from 5 to 10% by weight.

4. The process according to any of claims 1 to 3, wherein the recycled undersize has a water content of less than 10% by weight.

5. The process according to any of claims 1 to 4, wherein the residence time on the continuous belt is at least 15 minutes.

6. The process according to any of claims 1 to 5, wherein monomer a) is acrylic acid to an extent of at least 50 mol%.

7. The process according to claim 6, wherein the acrylic acid has been neutralized to an extent of at least 25 mol%.

8. The process according to any of claims 1 to 7, wherein the monomer solution comprises at least 0.01% by weight of crosslinker b), based on monomer a).

9. The process according to any of claims 1 to 8, wherein the water-absorbing polymer particles have a centrifuge retention capacity of at least 15 g/g.

## Revendications

1. Procédé de fabrication continue de particules polymères absorbant l'eau par polymérisation d'une solution ou d'une suspension de monomères, contenant :
a) au moins un monomère éthyléniquement insaturé, portant des groupes acides, qui peut au moins partiellement être neutralisé,
b) au moins un agent de neutralisation,
c) au moins un initiateur,
d) éventuellement un ou plusieurs monomères éthyléniquement insaturés copolymérisables avec les monomères cités en a), et
e) éventuellement un ou plusieurs polymères solubles dans l'eau,
comprenant une polymérisation sur une bande circulant en continu, un séchage, un broyage, une classification et un recyclage au moins partiel du tamisat inférieur formé lors de la classification dans la solution ou la suspension de monomères, un tamis d'une largeur de mailles de jusqu'à 250 µm étant utilisé pour la séparation du tamisat inférieur, **caractérisé en ce que** la quantité de tamisat inférieur recyclé, par rapport à la solution de monomères, est de 1 à 30 % en poids, le nombre de doubles liaisons éthyléniques dans la solution ou la suspension de monomères est d'au moins 4 mol/kg et l'épaisseur de couche de la solution ou de la suspension de monomères sur la bande en circulation est d'au moins 5 cm.

2. Procédé selon la revendication 1, **caractérisé en ce que** la teneur en eau de la solution ou de la suspension de monomères est de moins de 60 % en poids.

3. Procédé selon la revendication 1 ou 2, **caractérisé en ce que** la quantité de tamisat inférieur recyclé, par rapport à la solution de monomères, est de 5 à 10 % en poids.

4. Procédé selon l'une quelconque des revendications 1 à 3, **caractérisé en ce que** le tamisat inférieur recyclé présente une teneur en eau de moins de 10 % en poids.

5. Procédé selon l'une quelconque des revendications 1 à 4, **caractérisé en ce que** le temps de séjour sur la bande en circulation est d'au moins 15 minutes.

6. Procédé selon l'une quelconque des revendications 1 à 5, **caractérisé en ce que** le monomère a) est l'acide acrylique à hauteur d'au moins 50 % en moles.

7. Procédé selon la revendication 6, **caractérisé en ce que** l'acide acrylique est neutralisé à hauteur d'au moins 25 % en moles.

8. Procédé selon l'une quelconque des revendications 1 à 7, **caractérisé en ce que** la solution de monomères contient au moins 0,01 % en poids d'agent de réticulation b), par rapport au monomère a).

9. Procédé selon l'une quelconque des revendications 1 à 8, **caractérisé en ce que** les particules polymères absorbant l'eau présentent une capacité de rétention centrifuge d'au moins 15 g/g.
